Europäisches Patentamt

European Patent Office

Office européen des brevets

(19)

(11) **EP 0 355 716 B1**

(12) # EUROPEAN PATENT SPECIFICATION

(45) Date of publication and mention
of the grant of the patent:
**28.05.1997  Bulletin 1997/22**

(51) Int Cl.[6]: **G06F 9/44**

(21) Application number: **89115189.6**

(22) Date of filing: **17.08.1989**

(54) **Rule generating apparatus and method of generating rules for fuzzy inference**

Vorrichtung und Verfahren zum Erzeugen von Regeln für unscharfe Inferenz

Dispositif et methode pour générer des règles pour inference floue

(84) Designated Contracting States:
**AT BE CH DE ES FR GB GR IT LI NL SE**

(30) Priority: **18.08.1988  JP 203912/88**

(43) Date of publication of application:
**28.02.1990  Bulletin 1990/09**

(60) Divisional application: **96100926.3**

(73) Proprietor: **OMRON CORPORATION
Kyoto (JP)**

(72) Inventors:
• **Yamakawa, Takeshi
Iizuka-shi Fukuoka-ken (JP)**
• **Ishida, Tsutomu Patent Center
Nagaokakyo-shi Kyoto 617 (JP)**

(74) Representative: **WILHELMS, KILIAN & PARTNER
Patentanwälte
Eduard-Schmid-Strasse 2
81541 München (DE)**

(56) References cited:
• **SYSTEMS AND COMPUTERS IN JAPAN, vol. 19, no. 5, May 1988, pp. 26-36, Scripta Technica, Inc., Silver Spring, MD, US; S. MORISHIMA et al.: "Automatic rule extraction from statistical data and fuzzy tree search", Translated from "DENSHI TSUSHIN GAKKAI ROMBUSHI", vol. 69D, no. 11, November 1986, pp. 1754-1764**
• **COMPUTER, vol. 21, no. 4, April 1988, pages 83-93, IEEE, New York, US; L.A. ZADEH: "Fuzzy logic"**
• **PROCEEDINGS TENCON 87, 1987 IEEE REGION 10 CONFERENCE "COMPUTERS AND COMMUNICATIONS TECHNOLOGY TOWARD 2000", Seoul, 25th-29th August 1987, vol. 2, pp. 655-659, IEEE, New York, US; K.S. LEUNG et al.: "A fuzzy knowledge-based system shell-system Z-1"**

## Description

## BACKGROUND OF THE INVENTION

Field of the Invention

The present invention relates to a rule generating apparatus and method for fuzzy inference.

Description of the Background Art

A fuzzy control device for performing control by fuzzy inferences or fuzzy arithmetic operations has been in the spotlight. The fuzzy control device is also referred to as a fuzzy inference arithmetic unit, a fuzzy controller or a fuzzy computer, which is realized by not only a dedicated device for fuzzy inferences (either an analogue or digital type device) (see, for example, "NIKKEI ELECTRONICS", NIKKEI McGRAW HILL BOOK COMPANY, September 27, 1987, No. 426, pp. 148-152) but also a binary type computer, processor or the like programmed so as to implement fuzzy inferences.

In any case, membership functions concerning input and output variables and rules must be set in order to operate the fuzzy control device. The rules and the membership functions are mutually related, so that their designs made to obtain desired control performance are substantially complicated.

An apparatus according to the preamble of claim 1 and a method according to the preamble of claim 5 is known from SYSTEMS AND COMPUTERS IN JAPAN, vol. 19, no. 5, May 1988, pages 26-36, Scripta Technica, Inc., Silver Spring, MD, US; S. MORISHIMA et al.: "Automatic rule extraction from statistical data and fuzzy tree search", Translated from "DENSHI TSUSHIN IN GAKKAI ROMBUSHI", vol. 69D, no. 11, November 1986, pages 1754-1764.

## SUMMARY OF THE INVENTION

An object of the present invention is to provide an apparatus and a method capable of automatically generating rules for fuzzy inference, at least candidates for applicable rules.

The rule means herein a rule of an IF-THEN type or a rule for a modus ponens inference.

A rule generating apparatus for fuzzy inference according to the present invention is defined in claim 1. The corresponding method is defined in claim 5.

This rule generating apparatus is applicable to not only a case in which there is one kind of input variable but also a case in which there are two or more kinds of input variables.

In this rule generating apparatus, the membership functions concerning the input and output variables are basically fixed. However, it is, of course, possible to repeat the generation of rules while changing the shapes of the membership functions.

The rule generating apparatus according to the present invention is particularly useful in a case in which an input value to a fuzzy control device and an output value corresponding thereto have been previously found. Data concerning the input value and the output value can be obtained from past data of the system to be controlled such as running data and operating data. In the rule generating apparatus according to the present invention, applicable rules or candidates to be employed as rules can be obtained only by entering a pair of the input value and the output value corresponding thereto. The generated rules may be used without any modification. Alternatively, only rules of particular use extracted from the generated rules by suitable selection based on simulation or the like can be used. According to the present invention, time or labor required to make rules can be significantly reduced in the above described manner.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a block diagram showing a structure of a rule generating and verifying apparatus for fuzzy control;
Fig. 2 is a flow chart showing the procedure of rule generating processing;
Figs. 3 to 7 are diagrams showing an example of a display screen, where Figs. 3 to 5 illustrates the display screen in rule generating processing, and Figs. 6 and 7 illustrates the display screen in rule verifying processing; and
Fig. 8 is a diagram showing an example of a display screen in a case in which there are two types of input variables.

## DESCRIPTION OF THE PREFERRED EMBODIMENTS

A rule generating apparatus for fuzzy control according to the present invention is feasible by a binary type computer, for example, a microprocessor. In the present embodiment, the rule generating apparatus for fuzzy control is realized by an ordinary computer system including a CPU.

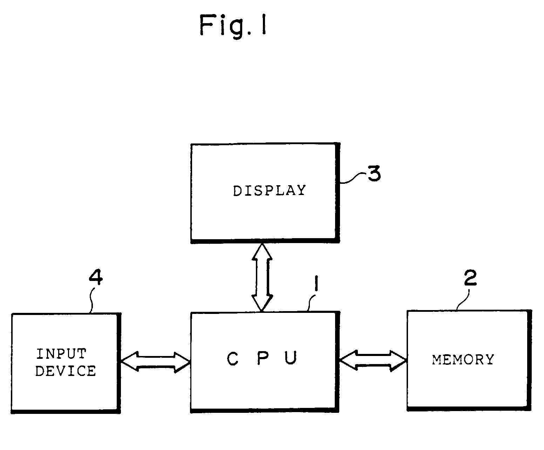

Fig. 1 is a diagram showing a schematic structure of a rule generating and verifying apparatus for fuzzy control, which comprises a CPU 1 for performing rule generating and verifying processing and a memory 2 connected thereto. The memory 2 stores membership functions concerning input and output variables and other data. The CPU 1 is further connected to a display device 3 and an input device 4. The display device 3 is, for example, a CRT (cathode ray tube) display device. Input and output values, the membership functions, generated rules and the like are displayed on the display device 3. The input device 4 comprises a mouse for specifying the positions of points indicating the input and output values on a display screen, keys attached to the mouse, and various function keys, a ten-key pad and the like provided on a keyboard. A printer, for example, in addition to the display device 3, may be connected as an output device.

In the present embodiment, we will consider membership functions expressed by linguistic information PL, PM, PS, ZR, NS, NM and NL. PL, PM, PS, ZR, NS, NM and NL respectively represent a positive large value, a positive medium value, a positive small value, almost zero, a negative small value, a negative medium value and a negative large value.

Let x and y, and z be respectively input variables and an output variable. When there is one kind of input variable (only x), an example of rules for fuzzy control is expressed as follows:

$$\text{If } x = NS \qquad \text{then } Z = NM$$

This indicates a rule "If x is NS, then z is NM".

When there are two kinds of input variables (x and y), an example of rules for fuzzy control is expressed as follows:

$$\text{If } x = NS \text{ and } y = NM \qquad \text{then } z = NL$$

This indicates a rule "If x is NS and y is NM, then z is NL". In the rule generating apparatus according to the present invention, the above described rules are automatically generated by providing the inputs x (and y) and the output z corresponding thereto (an output value to be obtained by a fuzzy inference when the inputs x (y) are applied).

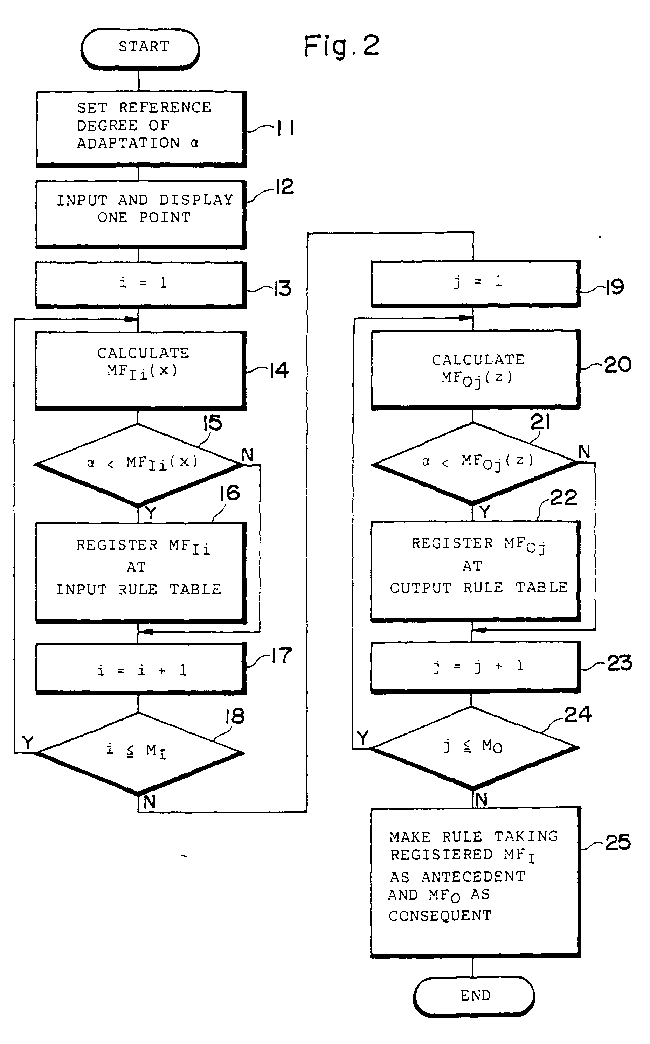

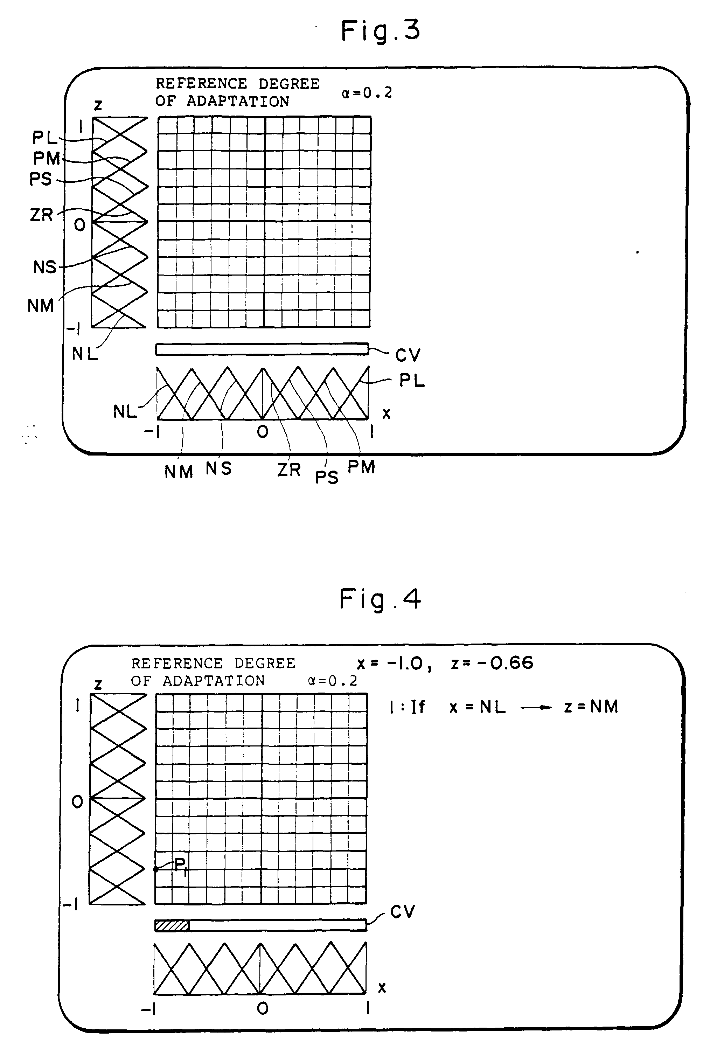

For simplicity, the procedure of rule generating processing performed when there is one kind of input variable (only x) will be described with reference to a flow chart of Fig. 2 and display screens shown in Figs. 3 to 5.

As shown in Fig. 3, a coordinate system comprising the axis of abscissa for the input variable x and the axis of ordinate for the output variable z and membership functions respectively concerning the input variable x and the output variable z with respect to the axis of abscissa and the axis of ordinate are displayed on the display screen of the display device 3. In the present embodiment, membership functions in the triangular shape are illustrated for simplicity. In addition, the membership function concerning the input variable x and the membership function concerning the output variable z are precisely the same. Such membership functions have been previously set in the memory 2. When all the membership functions take the same shape (the positions thereof are different), however, it is sufficient to previously store a membership function, for example, of ZR and shift the same on the x-axis and z-axis as required. A display band area CV for indicating a range of the input variable x covered with made rules is further displayed on the display screen.

First, a reference degree of adaptation $\alpha$ is entered from the keyboard of the input device 4 (step 11). This reference degree of adaptation is used in determining whether or not a membership function is used as a candidate for a rule. When a function value of a membership function with respect to an input value is larger than this reference degree of adaptation $\alpha$, the membership function is employed as a candidate for a rule. The reference degree of adaptation must be set respectively with respect to an input and an output. In this embodiment, a single degree of adaptation $\alpha = 0.2$ is common to both the input and the output. The entered value $\alpha = 0.2$ is displayed on the display device 3 (see Fig. 3).

Subsequently, a pair of a first input value $x_1$ and output value $z_1$ (point $P_1$ ($x_1 = -1$, $z_1$ -0.66)) in the coordinate system on the display screen is inputted using the mouse of the input device 4 (step 12, see Fig. 4). When input of this point $P_1$ is completed (the point $P_1$ fixed on the display screen), degrees of adaptation of the input value $x_1$ to all the membership functions concerning the input variable are respectively calculated, to extract a membership function or membership functions to be employed as a candidate for a rule or candidates for rules on the basis of the result of this calculation (steps 13 to 18).

$MF_{Ii}$ taken as a membership function concerning an input variable (i = 1 to $M_I$; $M_I$ is the number of membership functions concerning the input variable; $M_I = 7$ in the present embodiment), and $MF_{Ii}(x)$ is taken as a function value of the membership function with respect to the input value x, that is, a grade of membership function or a degree of adaptation.

i is set to 1 (step 13), $MF_{II}(x)$ is calculated (step 14), it is determined whether or not $MF_{Ii}(x)$ exceeds the reference degree of adaptation $\alpha$ (step 15), and $MF_{Ii}$ is registered at an input rule table in the memory 2 if it exceeds the reference degree of adaptation $\alpha$ (step 16). After this processing is performed or if the answer is in the negative in the step 15, i is incremented (step 17). Processing in the steps 14 to 17 is repeated until i reaches $M_I + 1$.

Subsequently, degrees of adaptation of the output value $z_1$ to all the membership functions concerning the output variable are respectively calculated in the same manner, to extract a membership function to be employed as a candidate for a rule (steps 19 to 24).

$MF_{Oj}$ is taken as a membership function concerning an output variable (j = 1 to $M_O$; $M_O$ is the number of membership functions concerning the output variable; $M_O = 7$ in the present embodiment), and $MF_{Oj}(z)$ is taken as a function value of the membership function with respect to the output value z, that is, a grade of membership function or a degree of adaptation.

Finally, a rule is made which respectively takes the membership function $MF_{Ii}$ concerning an input variable registered at the rule table in the step 16 and the membership function $MF_{Oj}$ concerning an output variable registered at an output rule table in the step 22 as an antecedent and a consequent. This rule is displayed on the display device 3 (step 25, see Fig. 4).

The registered membership functions $MF_I$ and $MF_O$ are respectively only NL and NM with respect to the point $P_1$. Accordingly, only one rule (rule 1) is made. "then" is represented by an arrow on the display screen. Furthermore, in the display band area CV on the display screen, a range of the input variable x covered with this rule 1 (i.e., membership function NL) is represented by hatching.

In the step 25, when a plurality of membership functions concerning input and output variables are registered, rules are made by a combination of these membership functions. For example, when the respective numbers of the registered membership functions $MF_I$ and $MF_O$ are two, a total of four rules are made.

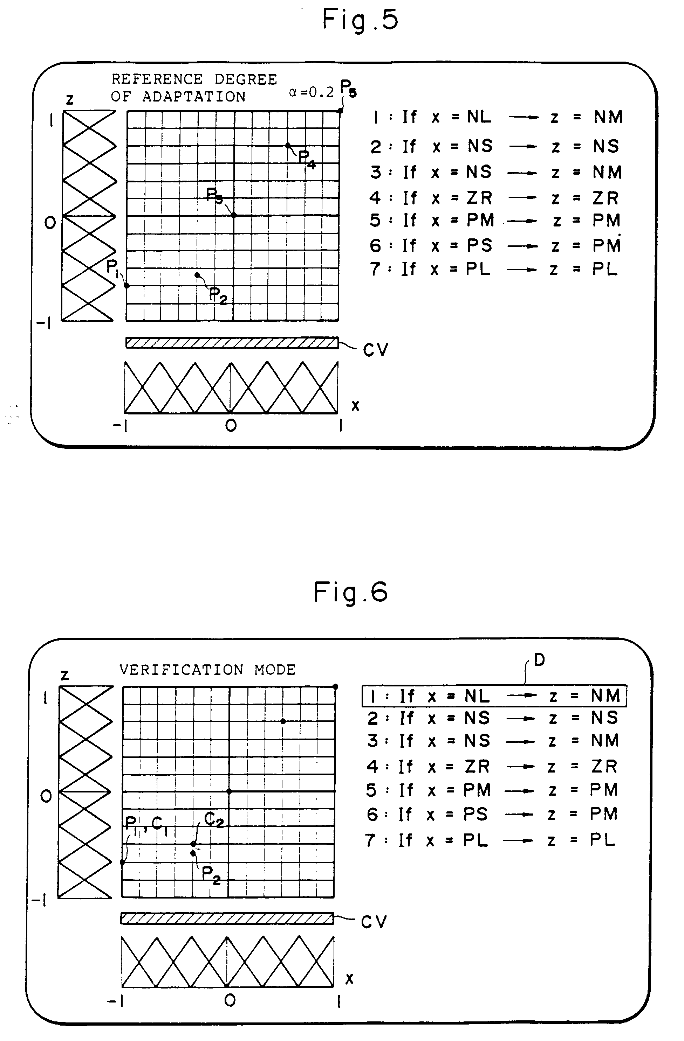

Every time a pair of an input value and an output value (point $P_2$, $P_3$, $P_4$, $P_5$ or the like) is inputted, the above described processing is performed. Fig. 5 illustrates an example of the display screen in a case in which the five points ($P_1$ to $P_5$) are inputted and making of rules related to the points is terminated. The rule 1 is made on the basis of the point $P_1$ as described above. Similarly, rules 2 and 3 are made on the basis of the point $P_2$, a rule 4 is made on the basis of the point $P_3$, rules 5 and 6 are made on the basis of the point $P_4$, and a rule 7 is made on the basis of the point $P_5$. The entire display band area CV is represented by hatching. Accordingly, it is found that all areas of the input variable x are completely covered with a range of definition of the membership functions which are related to the rules 1 to 7.

The rule generating and verifying apparatus according to the present invention can also verify whether or not correct fuzzy control can be achieved on the basis of the plurality of rules made in the above described manner.

The verifying operation includes verification and interpolation with respect to input points.

The verification with respect to the input points is achieved in the following manner. First, the input value $x_1$ representing the input point $P_1$ subjected to a fuzzy inference using all the made rules 1 to 7 to obtain the result $z_{c1}$ of the inference with respect to the corresponding output value $z_1$, thereby to display a point $C_1$ ($x_1$, $z_{c1}$). In an example of the display screen shown in Fig. 6, the input point $P_1$ and the point $C_1$ obtained by the inference are overlapped with each other, which indicates that the rules are appropriate. A known operation rule for fuzzy inference, for example, a MIN-MAX operation rule can be used for fuzzy inferences. Subsequently, in the same manner, an input value $x_2$ representing the input point $P_2$ is subjected to a fuzzy inference using all the rules, thereby to display a point $C_2$ ($x_2$, $z_{c2}$) obtained by the inference. In Fig. 6, the point $C_2$ is slightly shifted from the input point $P_2$. It is necessary for an operator to determine whether or not this shift is allowed. Similarly, each of input values representing the input points is subjected to a fuzzy inference using all the rules, thereby to display a point indicating the result of the inference on the display screen.

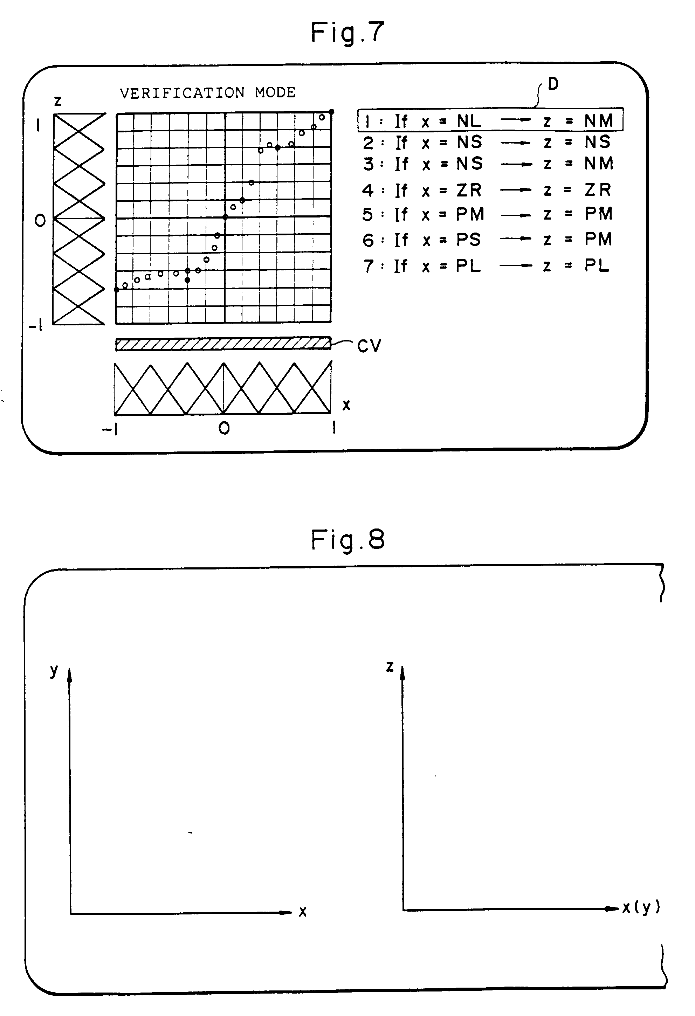

Verification by interpolation is achieved in the following manner. One or a plurality of interpolation points are selected between two points such as between input values $x_1$ and $x_2$ and between $x_2$ and $x_3$. The interpolation points may be set at constant intervals. The operator may enter the interpolation points using the input device 4 or the CPU 1 may automatically set the same. Each of the interpolation points is subjected to a fuzzy inference operation using all the rules so as to obtain an output value corresponding thereto. Points defined by the interpolation points (input values) (the x-coordinate) and the output values obtained by the inference (the z-coordinate) are represented by hollow circles on the coordinate system of the display screen as shown in Fig. 7. The operator can verify by watching this display whether or not inferences can be suitably implemented in places other than the input points using the made rules.

The significance of the made rules can be checked. This check is performed by excepting a rule to be checked from the inference operation. When a rule to be excepted is specified by the input device 4, the specified rule is enclosed with a frame D on the display screen as clearly shown in Figs. 6 and 7. The above described verification or interpolation with respect to the input points can be achieved using all rules other than the rule thus specified to be excepted, so that the results of inferences are displayed in the same manner. The operator can determine by watching this display whether the excepted rule is indispensable or is not necessarily required. Not only one but also a plurality of rules can be simultaneously specified as rules to be excepted.

The rule generating and verifying apparatus may be returned to the above described rule generation mode after such rule verifying processing. In the rule generation mode, a new rule can be generated or a rule made by the operator can be entered. Thereafter, the operation in the verification mode may be performed again. In some instances, rules may be generated or verified again in the same manner by changing the shapes of or modifying the membership functions.

Although in the above described embodiment, description was made of a case in which there is one kind of input variable, it should be noted that the present invention can be applied to a case in which there are two or more kinds of input variables. When there are two kinds of input variables x and y, two coordinate systems may be displayed on a display screen as shown in Fig. 8, the input variables x and y being specified by one of the coordinate systems, while an output variable z corresponding to the input variable x (or y) being specified by the other coordinate system. Input and output points can be also specified in three dimensions using the x, y and z coordinate system. The processing in the steps 13 to 18 shown in Fig. 2 is performed with respect to the other input variable y. In the step 25, a rule may be made by a combination of registered membership functions concerning each of the input variables x and y and registered membership functions concerning the output variable z.

As can be seen from Fig. 7, the apparatus according to the present invention can generate a non-linear function using made rules. Accordingly, the apparatus can be utilized as a function generator.

Although the present invention has been described and illustrated in detail, it is clearly understood that the same is by way of illustration and example only and is not to be taken by way of limitation, the present invention being limited only by the terms of the appended claims.

## Claims

1. A rule generating apparatus for fuzzy inference, comprising;

   means (2) for storing a plurality of predetermined membership functions for fuzzy control concerning an input variable and a plurality of predetermined membership functions for fuzzy control concerning an output variable;
   means (4) for inputting paired data comprising a predetermined input value and an output value to be obtained by a fuzzy inference when the predetermined input value is given;
   means (3) for outputting the extracted membership functions concerning the input and output variables, characterized by
   first processing means for finding degrees of adaptation of the given input value to the plurality of membership functions concerning the input variable, to extract a membership function as a candidate for a rule if the found degree of adaptation exceeds a required first reference degree of adaptation with respect to the given input variable;
   second processing means for finding degrees of adaptation of the given output value to the plurality of membership functions concerning the output variable, to extract a membership function as a candidate for a rule if the found degree of adaptation exceeds a required second reference degree of adaptation with respect to the given output variable;
   means for outputting the extracted membership functions concerning the input and output variables; and

means for combining the extracted membership functions in order to specify rules.

2. A rule generating apparatus for fuzzy inference according to claim 1, wherein when there are a plurality of kinds of input variables,

   a plurality fo membership functions have been determined in said storing means for each kind of the input variables,
   an input value is inputted by said inputting means for each kind of the input variables, and said first processing means finds the degrees of adaptation of the input value to the plurality of membership functions for each kind of the input variables, to extract a membership function as a candidate for a rule if the found degree of adaptation exceeds the first reference degree of adaptation set for each kind of the input variables.

3. A rule generating apparatus for fuzzy inference according to claim 1, which further comprises means for performing a fuzzy inference by applying a given input value or an arbitrary input value to rules selected out of rules defined by a combination of the membership functions extracted by said first and second processing means to obtain a corresponding output value and outputting the output value.

4. A rule generating apparatus for fuzzy inference according to anyone of the preceding claims, further comprising a rule verification means, said rule verification means comprising:

   means for storing a set of rules corresponding to the extracted membership functions;
   means for specifying at least one rule to be excepted;
   inference means for subjecting an input value to a fuzzy inference operation using said set rules excluding said at least one rule specified as being excepted, to obtain a corresponding output value; and
   means for outputting the output value obtained by the fuzzy inference operation.

5. A method of generating rules for fuzzy inference comprising:

   storing a plurality of predetermined membership functions for fuzzy control concerning an input variable and a plurality of predetermined membership functions for fuzzy control concerning an output variable;
   inputting paired data comprising a predetermined input value and an output value to be obtained by a fuzzy inference when the predetermined input value is given;
outputting the extracted membership functions concerning the input and output variables, characterized by
finding degrees of adaptation of the given input value to the plurality of membership functions concerning the input variable, to extract a membership function as a candidate for a rule if the found degree of adaptation exceeds a required first reference degree of adaptation;
finding degrees of adaptation of the given output value to the plurality of membership functions concerning the output variable, to extract a membership function as a candidate for a rule if the found degree of adaptation exceeds a required second reference degree of adaptation;
outputting the extracted membership functions concerning the input and output variables; and combining the extracted membership functions in order to specify rules.

6. A method of generating rules according to claim 5, which further comprises performing a fuzzy inference by applying a given input value or an arbitrary input value to rules selected out of rules defined by a combination of the extracted membership functions concerning the input and output variables to obtain a corresponding output value and outputting the output value.

**Patentansprüche**

1. Regelerzeugungsvorrichtung für Fuzzy-Schlußfolgerung, mit

Mitteln (2) zum Speichern einer Anzahl von vorgegebenen Zugehörigkeitsfunktionen für Fuzzy-Regelung betreffend eine Eingangsvariable und eine Anzahl von vorgegebenen Zugehörigkeitsfunktionen für Fuzzy-Regelung betreffend eine Ausgangsvariable,
Mitteln (4) zum Eingeben gepaarter Daten, die einen bestimmten Eingangswert und einen Ausgangswert zur Gewinnung durch Fuzzy-Schlußfolgerung, wenn der bestimmte Eingangswert vorliegt, aufweisen,
Mitteln (3) zum Ausgeben der herausgezogenen Zugehörigkeitsfunktionen betreffend die Eingangs- und Ausgangsvariablen, gekennzeichnet durch
erste Verarbeitungsmittel zum Auffinden von Adaptionsgraden des gegebenen Eingangswerts an die Anzahl von Zugehörigkeitsfunktionen betreffend die Eingangsvariable, um eine Zugehörigkeitsfunktion als Kandidaten für eine Regel herauszuziehen, wenn der aufgefundene Adaptionsgrad einen geforderten ersten Referenz-Adaptionsgrad in Bezug auf die gegebene Eingangsvariable überschreitet,
zweite Verarbeitungsmittel zum Auffinden von Adaptionsgraden des gegebenen Ausgangswerts an die Anzahl von Zugehörigkeitsfunktionen betreffend die Ausgangsvariable, um eine Zugehörigkeitsfunktion als Kandidaten für eine Regel herauszuziehen, wenn der aufgefundene Adaptionsgrad einen geforderten zweiten Referenz-Adaptionsgrad in Bezug auf die gegebene Ausgangsvariable überschreitet,
Mittel zum Ausgeben der herausgezogenen Zugehörigkeitsfunktionen betreffend die Eingangs- und Ausgangsvariablen, und
Mittel zum Kombinieren der herausgezogenen Zugehörigkeitsfunktionen zur Spezifizierung von Regeln.

2. Regelerzeugungsvorrichtung für Fuzzy-Schlußfolgerung nach Anspruch 1, wobei, wenn eine Anzahl von Arten von Eingangsvariablen vorhanden ist,

eine Anzahl von Zugehörigkeitsfunktionen in den Speichermitteln für jede Art der Eingangsvariablen bestimmt worden ist,
ein Eingangswert mit den Eingabemitteln für jede Art der Eingangsvariablen eingegeben wird, und
die ersten Verarbeitungsmittel die Adaptionsgrade des Eingangswerts an die Anzahl von Zugehörigkeitsfunktionen für jede Art der Eingangsvariablen auffinden, um eine Zugehörigkeitsfunktion als Kandidaten für eine Regel herauszuziehen, wenn der aufgefundene Adaptionsgrad den ersten Referenz-Adaptionsgrad, der für jede Art der Eingangsvariablen eingestellt ist, überschreitet.

3. Regelerzeugungsvorrichtung für Fuzzy-Schlußfolgerung nach Anspruch 1, welche ferner Mittel zum Durchführen einer Fuzzy-Schlußfolgerung durch Anwenden eines gegebenen Eingangswerts oder eines beliebigen Eingangswerts auf Regeln, die aus Regeln ausgewählt sind, die durch eine Kombination der Zugehörigkeitsfunktionen definiert sind, die durch die ersten und zweiten Verarbeitungsmittel herausgezogen sind, um einen entsprechenden Ausgangswert zu gewinnen, und zum Ausgeben des Ausgangswertes aufweist.

4. Regelerzeugungsvorrichtung für Fuzzy-Schlußfolgerung nach irgendeinem der vorstehenden Ansprüche, welche ferner Regelverifizierungsmittel aufweist, wobei die Regelverifizierungmittel

Mittel zum Speichern eines Satzes von Regeln entsprechend den herausgezogenen Zugehörigkeitsfunktionen,

Mittel zum Spezifizieren wenigstens einer auszunehmenden Regel,

Schlußfolgerungsmittel zum Unterwerfen eines Eingangswerts einem Fuzzy-Schlußfolgerungsvorgang unter Verwendung der gesetzten Regeln mit Ausnahme der wenigstens einen als ausgenommen spezifizierten Regel, um einen entsprechenden Ausgangswert zu gewinnen, und

Mittel zum Ausgeben des mit dem Fuzzy-Schlußfolgerungsvorgang gewonnen Ausgangswerts aufweisen.

5. Verfahren zur Erzeugung von Regeln für Fuzzy-Schlußfolgerung, welches

das Speichern einer Anzahl von vorgegebenen Zugehörigkeitsfunktionen für Fuzzy-Regelung betreffend eine Eingangsvariable und eine Anzahl von vorgegebenen Zugehörigkeitsfunktionen für Fuzzy-Regelung betreffend eine Ausgangsvariable,

Eingeben gepaarter Daten, die einen bestimmten Eingangswert und einen Ausgangswert, der durch Fuzzy-Schlußfolgerung zu gewinnen ist, wenn der bestimmte Eingangswert vorliegt, aufweisen,

Ausgeben der herausgezogenen Zugehörigkeitsfunktionen betreffend die Eingangs- und Ausgangsvariablen aufweist, gekennzeichnet durch das

Auffinden von Adaptionsgraden des gegebenen Eingangswerts an die Anzahl von Zugehörigkeitsfunktionen betreffend die Eingangsvariable, um eine Zugehörigkeitsfunkion als Kandidaten für eine Regel herauszuziehen, wenn der aufgefundene Adaptionsgrad einen geforderten ersten Referenz-Adaptionsgrad überschreitet,

Auffinden von Adaptionsgraden des gegebenen Ausgangswerts an die Anzahl von Zugehörigkeitsfunktionen betreffend die Ausgangsvariable, um eine Zugehörigkeitsfunktion als Kandidaten für eine Regel herauszuziehen, wenn der aufgefundene Adaptionsgrad einen geforderten zweiten Referenz-Adaptionsgrad überschreitet,

Ausgeben der herausgezogenen Zugehörigkeitsfunktionen betreffend die Eingangs- und Ausgangsvariablen, und

Kombinieren der herausgezogenen Zugehörigkeitsfunktionen zur Spezifizierung von Regeln.

6. Verfahren zur Erzeugung von Regeln nach Anspruch 5, welches ferner das Durchführen einer Fuzzy-Schlußfolgerung durch Anwenden eines gegebenen Eingangswerts oder eines beliebigen Eingangswerts auf Regeln, die aus Regeln ausgewählt sind, die durch eine Kombination der herausgezogenen Zugehörigkeitsfunktionen betreffend die Eingangs- und Ausgangsvariablen definiert sind, um einen entsprechenden Ausgangswert zu gewinnen, und das Ausgeben des Ausgangswerts aufweist.

## Revendications

1. Un appareil générateur de règles pour inférence floue, comprenant:

un moyen (2) de mémorisation d'une série de fonctions d'appartenance prédéterminées pour une commande floue concernant une variable d'entrée et une série de fonctions d'appartenance prédéterminées pour une commande floue concernant une variable de sortie;

un moyen (4) d'entrée de données appairées comprenant une valeur d'entrée prédéterminée et une valeur de sortie à obtenir par inférence floue lorsque la valeur d'entrée prédéterminée est donnée;

un moyen (3) de sortie des fonctions d'appartenance extraites concernant les variables d'entrée et de sortie, caractérisé par

un premier moyen de traitement pour trouver des degrés d'adaptation de la valeur d'entrée donnée à la série de fonctions d'appartenance concernant la variable d'entrée, afin d'extraire une fonction d'appartenance comme candidate pour une règle si le degré trouvé d'adaptation dépasse un premier degré requis de référence d'adaptation en ce qui concerne la variable d'entrée;

un deuxième moyen de traitement pour trouver des degrés d'adaptation de la valeur de sortie donnée à la série de fonctions d'appartenance concernant la variable de sortie, afin d'extraire une fonction d'appartenance comme candidate pour une règle si le degré trouvé d'adaptation dépasse un deuxième degré requis de référence d'adaptation en ce qui concerne la variable de sortie;

un moyen de sortie des fonctions d'appartenance extraites concernant les variables d'entrée et de sortie; et

un moyen de combinaison des fonctions d'appartenance extraites afin de spécifier des règles.

2. Un appareil générateur de règles pour inférence floue selon la revendication 1 dans lequel, lorsqu'il existe une série de genres de variables d'entrée,

plusieurs fonctions d'appartenance ont été détectées dans ledit moyen de mémorisation pour chaque genre des variables d'entrée,

une variable d'entrée est entrée par ledit moyen d'entrée pour chaque genre des variables d'entrée, et

ledit premier moyen de traitement trouve les degrés d'adaptation de la valeur d'entrée à la série des fonctions d'appartenance pour chaque genre des variables d'entrée, afin d'extraire une fonction d'appartenance comme candidate pour une règle si le degré trouvé d'adaptation dépasse le premier degré de référence d'adaptation fixé pour chaque genre de variables d'entrée.

3. Un appareil générateur de règles pour inférence floue selon la revendication 1 qui comprend en outre un moyen de mise en oeuvre d'une inférence floue en appliquant une valeur d'entrée donnée ou une valeur d'entrée arbitraire à des règles sélectionnées parmi des règles définies par une combinaison des fonctions d'appartenance extraites par lesdits premier et deuxième moyens de traitement afin d'obtenir une valeur de sortie correspondante et de sortir la valeur de sortie.

4. Un appareil générateur de règles pour inférence floue selon l'une quelconque des revendications précédentes, qui comprend en outre un moyen de vérification de règles, ledit moyen de vérification de règles comprenant:

un moyen de mémorisation d'un ensemble de règles correspondant aux fonctions d'appartenance extraites;
un moyen de spécification d'au moins une règle particulière à excepter;
un moyen d'inférence pour soumettre une valeur d'entrée à une opération d'inférence floue en utilisant ledit ensemble de règles à l'exclusion de ladite règle particulière au moins spécifiée comme étant exceptée, afin d'obtenir une valeur de sortie correspondante; et
un moyen de sortie de la valeur de sortie obtenue par l'opération d'inférence floue.

5. Un procédé de génération de règles pour inférence floue, comprenant les étapes consistant à:

mémoriser une série de fonctions d'appartenance prédéterminées pour une commande floue concernant une variable d'entrée et une série de fonctions d'appartenance prédéterminées pour une commande floue concernant une variable de sortie;
entrer des données appairées comprenant une valeur d'entrée prédéterminée et une valeur de sortie à obtenir par inférence floue lorsque la valeur d'entrée prédéterminée est donnée;
sortir les fonctions d'appartenance extraites concernant les variables d'entrée et de sortie, caractérisé par les étapes consistant à
trouver des degrés d'adaptation de la valeur d'entrée donnée à la série de fonctions d'appartenance concernant la variable d'entrée, afin d'extraire une fonction d'appartenance comme candidate pour une règle si le degré trouvé d'adaptation dépasse un premier degré requis de référence d'adaptation;
trouver des degrés d'adaptation de la valeur de sortie donnée à la série de fonctions d'appartenance concernant la variable de sortie, afin d'extraire une fonction d'appartenance comme candidate pour une règle si le degré trouvé d'adaptation dépasse un deuxième degré requis de référence d'adaptation;
sortir les fonctions d'appartenance extraites concernant les variables d'entrée et de sortie; et
combiner les fonctions d'appartenance extraites afin de spécifier des règles.

6. Un procédé de génération de règles selon la revendication 5, qui comprend en outre l'étape consistant à mettre en oeuvre une inférence floue en appliquant une valeur d'entrée donnée ou une valeur d'entrée arbitraire à des règles sélectionnées parmi des règles définies par une combinaison des fonctions d'appartenance extraites concernant les variables d'entrée et de sortie afin d'obtenir une valeur de sortie correspondante et de sortir la valeur de sortie.

# Fig. 1

DISPLAY ⟶ 3

4

INPUT DEVICE ⟷ C P U ⟷ MEMORY

1

2

Fig.2

START

SET REFERENCE DEGREE OF ADAPTATION $\alpha$ — 11

INPUT AND DISPLAY ONE POINT — 12

$i = 1$ — 13

$j = 1$ — 19

CALCULATE $MF_{Ii}(x)$ — 14

CALCULATE $MF_{Oj}(z)$ — 20

$\alpha < MF_{Ii}(x)$ — 15 — N

$\alpha < MF_{Oj}(z)$ — 21 — N

Y

Y

REGISTER $MF_{Ii}$ AT INPUT RULE TABLE — 16

REGISTER $MF_{Oj}$ AT OUTPUT RULE TABLE — 22

$i = i + 1$ — 17

$j = j + 1$ — 23

$i \leq M_I$ — 18 — Y

$j \leq M_O$ — 24 — Y

N

N

MAKE RULE TAKING REGISTERED $MF_I$ AS ANTECEDENT AND $MF_O$ AS CONSEQUENT — 25

END

## Fig.3

## Fig.4

11

# Fig.5

REFERENCE DEGREE
OF ADAPTATION

$\alpha = 0.2$

1 : If x = NL ⟶ z = NM
2 : If x = NS ⟶ z = NS
3 : If x = NS ⟶ z = NM
4 : If x = ZR ⟶ z = ZR
5 : If x = PM ⟶ z = PM
6 : If x = PS ⟶ z = PM
7 : If x = PL ⟶ z = PL

# Fig.6

VERIFICATION MODE

1 : If x = NL ⟶ z = NM
2 : If x = NS ⟶ z = NS
3 : If x = NS ⟶ z = NM
4 : If x = ZR ⟶ z = ZR
5 : If x = PM ⟶ z = PM
6 : If x = PS ⟶ z = PM
7 : If x = PL ⟶ z = PL

12

# Fig.7

VERIFICATION MODE

D

1 : If x = NL ⟶ z = NM
2 : If x = NS ⟶ z = NS
3 : If x = NS ⟶ z = NM
4 : If x = ZR ⟶ z = ZR
5 : If x = PM ⟶ z = PM
6 : If x = PS ⟶ z = PM
7 : If x = PL ⟶ z = PL

CV

# Fig.8